# EUROPÄISCHE PATENTSCHRIFT

(11) **EP 1 863 623 B1**
(45) Veröffentlichungstag und Bekanntmachung des Hinweises auf die Patenterteilung: **26.10.2011**
(21) Anmeldenummer: 06723908.7
(22) Anmeldetag: 22.03.2006
(51) Int. Cl.: B29C 44/12

(54) **VERFAHREN ZUR HERSTELLUNG EINES INNENVERKLEIDUNGSTEILS FÜR KRAFTFAHRZEUGE**
METHOD FOR PRODUCING AN INTERIOR LINER FOR CARS
PROCÉDÉ DE FABRICATION D'UN REVETEMENT INTERIEUR POUR VEHICULES

(30) Priorität: 22.03.2005 DE 102005014085; 26.09.2005 FR 0509825
(43) Veröffentlichungstag der Anmeldung: 12.12.2007
(73) Patentinhaber: Faurecia Innenraum Systeme GmbH, 76767 Hagenbach (DE)
(72) Erfinder: HEINZ, Claus, 76764 Rheinzabern (DE); BAUMANN, Bernhard, 67363 Lustadt (DE); MEYER, Andreas, 76770 Hatzenbühl (DE); KÖHLER, Torsten, 67378 Zeiskam (DE); BAUMONT, Sebastien, 95310 Saint Ouen (FR); BEAU, Godefroy, 92250 La Garenne Colombes (FR); GEHRING, Andreas, 33739 Bielefeld (DE); STOOF, Freddy, 68180 Hornbourg-Wihr-en-Pleine (FR); NEUHARD, Thomas, 76891 Rumbach (DE)
(74) Vertreter: Pfenning, Meinig & Partner GbR
(86) Internationale Anmeldenummer: PCT/EP2006/002948
(87) Internationale Veröffentlichungsnummer: WO 2006/100118

(56) Entgegenhaltungen:
- DE-A1- 10 044 627
- DE-A1- 10 118 825
- DE-A1- 10 134 326
- DE-U1- 20 006 238
- DE-U1- 20 113 525
- PATENT ABSTRACTS OF JAPAN Bd. 017, Nr. 088 (M-1370), 22. Februar 1993 (1993-02-22) -& JP 04 284209 A (INOAC CORP), 8. Oktober 1992 (1992-10-08)
- PATENT ABSTRACTS OF JAPAN Bd. 2002, Nr. 06, 4. Juni 2002 (2002-06-04) -& JP 2002 052548 A (INOAC CORP), 19. Februar 2002 (2002-02-19) in der Anmeldung erwähnt

## Beschreibung

Die Erfindung betrifft ein Verfahren zur Herstellung eines Innenverkleidungsteil für Kraftfahrzeuge gemäß Anspruch 1.

Innenverkleidungsteile mit einer eine Dekoroberfläche bildender Deckschicht sind in der Automobilindustrie bekannt. Sie finden beispielsweise Verwendung als Instrumententafeln, als Türverkleidungen, als Säulenverkleidungen oder auch als Staufachabdeckungen.

Zweck solcher Bauteile ist, gewünschte mechanische Eigenschaften mit optischen und auch haptischen Eigenschaften zu verbinden. Um dies zu erreichen, setzt sich in der Regel solch ein Bauteil zusammen aus einem Träger, der die mechanischen Eigenschaften bestimmt, einer Schaumschicht, die die haptischen Eigenschaften bestimmt und einer Deckschicht, die im Wesentlichen die optischen Eigenschaften bestimmt. Es sind auch Bauteile bekannt, welche auf genannte zusätzliche Schaumschicht verzichten, d.h., die Haut unmittelbar mit dem Träger verbunden ist.

Des weiteren ist bekannt, Deckschichten aus zwei oder mehreren Häuten zusammenzusetzen.

Problematisch bei mehrteiligen Deckschichten ist allerdings, dass in den gemeinsamen Grenzbereichen der Häute beim Hinterschäumen oder Hinterspritzen Schaum bzw. hinterspritzte Masse aufgrund undichter Stellen heraustreten und somit die Qualität der Oberfläche mindern kann.

Ein bekanntes Verfahren für die schaumdichte Verbindung von Häuten ist, zunächst die Häute im Stoßbereich umzuschlagen und im ungeschlagenen Bereich miteinander zu vernähen. Die Naht wird dann für den Schäumvorgang zusätzlich abgedichtet.

Eine weitere Möglichkeit, Häute schaumdicht miteinander zu verbinden, beschreibt die Druckschrift DE 100 44 627 A1. Erfindungsgemäß werden zwei benachbarte Häute entlang ihrer Nahtlinie über ein Haltemittel miteinander verbunden. In einer Ausführungsform ist das Haltemittel als profilartige Leiste ausgebildet, die die benachbarten Häute entlang der Nahtlinie zusammenklemmt. Die derartig miteinander schaumdicht verbundenen Häute werden nach dem Verbinden mit dem Haltemittel in das Werkzeug eingelegt und dann hinterschäumt oder hinterspritzt.

Nachteile dieser Verfahren ist, dass ein zusätzlicher Verfahrensschritt und/oder zusätzliche Verbindungsmittel eingesetzt werden müssen, um die Häute miteinander zu verbinden.

Die Offenlegungsschrift JP 2002-052548 offenbart im benannten Stand der Technik ein Verfahren zur Herstellung eines Bauteils mit einer hinterschäumten, mehrteiligen Deckschicht, wobei zumindest zwei Häute mit abgewinkelten Endbereichen nebeneinander in eine Werkzeughälfte eines Schäumwerkzeugs eingelegt werden, so dass die Endbereiche der Häute in die Kavität hineinragen. Die beiden Endbereiche der Häute liegen flächig aufeinander. Die Oberfläche des einen Endbereichs ist auf der dem anderen Endbereich gegenüberliegenden Seite mit einem Vorsprung ausgebildet, der in eine korrespondierende Aussparung des anderen Endbereichs eingreift. Durch diesen Eingriff wird eine gewisse Dichtung erreicht, die verhindern soll, dass Schaum durch einen sich bildenden Spalt zwischen den beiden Endbereichen austreten kann.

Nachteil dieses Verfahrens bzw. dieser Art der Dichtung ist, dass zum einen die Häute eine gewisse Steifigkeit aufweisen und in ihrer Position fixiert sein müssen, um ihre Form und Lage auch während des Hinterschäumens oder Hinterspritzens halten zu können. Aufgrund dessen ist die Wahl der Häute, die Wahl der Drücke und der Fließvorgänge der Schaummasse bzw. Spritzgussmasse beim Hinterschäumen und Hinterspritzen erheblich eingeschränkt. Des Weiteren ist eine ausreichende Dichtheit solch einer Anordnung, da der für die Dichtheit vorteilhafte Anpressdruck der beiden Endbereiche gegeneinander alleine aus der Lage und den Materialeigenschaften der Häute resultiert, oftmals nicht zu erreichen. Des Weiteren ist auch eine genügende Länge des Kontaktbereiches der beiden Endbereiche notwendig, um eine ausreichende Dichtheit zu gewährleisten.

Aufgabe der vorliegenden Erfindung ist es deswegen, ein Verfahren zur Herstellung eines Innenverkleidungsteils für Kraftfahrzeuge gemäß Anspruch 1.

Nach dem erfindungsgemäßen Verfahren können die Häute, im Gegensatz zur DE 100 44 627 Al, insbesondere einzeln in das Werkzeug eingelegt werden. Aufgrund dessen kann auf den Schritt, vor dem Einlegen der Häute in das Werkzeug die Häute schaum- oder spritzdicht zu verbinden, verzichtet werden.

Die Dichtheit der von den Häute gebildeten Dekoroberfläche im Grenzbereich der Häute wird dadurch gewährleistet, dass zumindest bereichsweise durch zumindest einseitiges Drücken der übereinander liegenden Endbereiche gegen eine die Form und Lage der zusammengepressten Endbereiche bestimmende Wand schaumdicht bzw. spritzdicht zusammengepresst werden. Im Gegensatz zum in der Offenlegungsschrift JP 2002-052548 zitierten Stand der Technik werden die übereinander liegenden Endbereiche (zwischen einer Wand und einem Druckmedium) zusammengepresst. Durch das ausdrückliche Zusammenpressen der Endbereiche kann, insbesondere unter Aufwendung eines hohen Drucks, eine hohe Dichtheit dieses Bereiches erzeugt werden. Des weiteren ist, ebenfalls im Gegensatz zum in der Offenlegungsschrift JP 2002-052548 zitierten Stand der Technik, eine spezielle Form der Endbereiche, abgesehen von der Abwinkelung, nicht notwendig.

Der Winkel der Abwinkelung kann beliebig gewählt werden, beispielsweise mit 90°. Vorzugsweise ergänzen sich die Winkel der Abwinkelungen der beiden Endbereiche der Häute zu etwa 180°. Dies erleichtert das Nebeneinanderlegen der Häute, ist aber nicht zwingend notwendig.

Des weiteren können die Häute auch ohne einen direkten Kontakt in das Werkzeug eingelegt werden. Der Kontakt kann in einem späteren Schritt durch das Zusammenpressen der Endbereiche hergestellt werden.

Das Andrücken der übereinander liegenden Endbereiche der Häute an die Wand geschieht vorzugsweise durchgängig, d.h., ohne Unterbrechung, entlang des gesamten Verlaufes des gewünschten schaumdichten Grenzbereiches der benachbarten Häute, um eine möglichst gute Dichtigkeit zu gewährleisten. Grundsätzlich ist es aber auch möglich, nur abschnittsweise einen Anpressdruck auszuüben.

Als Häute können nahezu beliebige flächige, dünnwandige Bauteile, insbesondere die in der Automobilindustrie als typische Häute verwendete Elemente, eingesetzt werden, beispielsweise Gießhäute, Slushhäute, beispielsweise aus PVC, Spritzhäute, beispielsweise aus PUR, mehrlagige Verbundfolien, Leder, Gewebe, Gewirke etc.

Insbesondere lassen sich auch unterschiedliche Arten von Häuten, beispielsweise eine PVC-Haut mit einer PUR-Haut, miteinander kombinieren. Dies ist nach dem bisherigen Stand der Technik nicht üblich.

Als typisches Material für das Hinterschäumen soll hier Polyurethan genannt sein, für das Hinterspritzen Polypropylen.

Vorteilhafte Weiterbildungen dieses Verfahrens werden in den abhängigen Ansprüchen beschrieben.

Eine vorteilhafte Weiterbildung dieses Verfahrens sieht vor, dass die Endbereiche der Häute nach dem Einlegen der Häute in die zweite Werkzeughälfte zumindest bereichsweise miteinander verschmolzen werden.

Grundsätzlich ist eine dauerhafte stabile Verbindung der Endbereiche aufgrund der Wirkung des hinterschäumten oder hinterspritzten Materials, welches die Häute ebenfalls fixiert, nicht mehr notwendig. Trotzdem kann es aber sinnvoll sein, die Endbereiche der beiden Häute zusätzlich miteinander zu verbinden, beispielsweise um die Optik zu verbessern. Erfindungsgemäß wird dies durch eine Verschmelzung der Endbereiche erreicht.

Unter Verschmelzen soll hier auch ein bereichsweises Anschmelzen zumindest einer der Oberflächen eines Endbereiches, welcher in Kontakt ist mit dem gegenüber liegenden Endbereich, verstanden werden.

Das Verschmelzen der Endbereiche kann beispielsweise durch Ausübung von ausreichend hohem Druck beim Zusammenpressen der Endbereiche, durch zusätzliche Erwärmung der Endbereiche vor dem Einlegen in das Werkzeug bzw. im eingelegten Zustand erreicht werden.

Grundsätzlich bleiben natürlich die Möglichkeiten erhalten, die Endbereiche nachträglich zu verkleben, zu klemmen oder andersartig miteinander zu verbinden.

Eine weitere vorteilhafte Weiterbildung der Erfindung sieht vor, dass eine der Häute, vorzugsweise beide Häute, aus einem Thermoplasten besteht bzw. bestehen. Dies ist insbesondere dann sinnvoll, wenn die Endbereiche der beiden Häute miteinander verschmolzen werden sollen. In diesem Falle können auch schon erstarrte Häute miteinander noch verbunden werden.

Als Materialien eignen sich beispielsweise TPE (thermoplastische Elastomere) oder TPO (thermoplastische Elastomere auf der Basis von Olefinen), Mischungen von PVC und ABS, ASA (Acrylnitil-Styrol-Acrylester-Copolymer) und Mischungen von PVC und ASA.

Eine vorteilhafte erste Variante des Verfahrens sieht vor, dass die Häute auf diese Weise in die zweite Werkzeughälfte eingelegt werden, dass die abgewinkelten Endbereiche der Häute von der Kavität des Werkzeugs weg gerichtet sind, und während des Hinterschäumens oder des Hinterspritzens die Endbereiche der Häute durch im Bereich der Kavität liegende gegeneinander bewegliche Oberflächenbereiche der zweiten Werkzeughälfte zumindest bereichsweise zusammengepresst werden.

Die gegeneinander beweglichen Oberflächenbereiche können beispielsweise durch starre Elemente gebildet werden, die gegeneinander verschiebbar sind, und zwischen denen die Endbereiche der Häute zusammenpressbar sind. Eine weiteres Beispiel sind verformbare Oberflächenbereiche, die hier auch unter dem Begriff "beweglich" fallen sollen, durch deren Verformung ein Druck auf die übereinander liegenden Endbereiche ausgeübt und diese somit zusammengepresst werden können.

Insbesondere kann durch die beweglichen Oberflächenbereiche, beispielsweise durch die erwähnten verschiebbaren starren und verformbaren Oberflächenbereiche, eine die Form und Lage der zusammengepressten Endbereiche bestimmende Wand gebildet werden. Dies ist aber nicht zwingend notwendig.

Durch die beweglichen Oberflächenbereiche ist es möglich, einen ausreichenden Druck auf die Endbereiche der Häute auszuüben, so dass diese schaumdicht oder spritzdicht zusammengepresst werden.

Eine vorteilhafte Weiterbildung der ersten Variante sieht vor, dass die Endbereiche der Häute mit einer Zierleiste eingefasst werden.

Eine weitere vorteilhafte Weiterbildung der ersten Variante des Verfahrens sieht vor, dass die Endbereiche der Häute vor dem Einlegen der Häute in das Werkzeug mit einer Leiste eingefasst werden, oder die Leiste zunächst zwischen den beweglichen Oberflächenbereichen der zweiten Werkzeughälfte angeordnet und darauf folgend die Endbereiche der Häute in die Leiste eingeführt werden, oder nach dem Hinterschäumen oder Hinterspritzen die Endbereiche der Haut mit einer Leiste eingefasst werden.

Eine derartige Leiste kann beispielsweise eine Zierleiste sein, um die hervorstehenden Endbereiche der Häute optisch ansprechend abzudecken. Für das Einfassen der Endbereiche eignet sich des weiteren beispielsweise eine Leiste mit einem U-förmigen Profil.

Erfindungsgemäß bevorzugt wird die Zierleiste vor den Häuten in die zweite Werkzeughälfte eingelegt. Danach werden die Häute eingelegt, so dass deren Endbereiche von der Leiste eingefasst werden. Das schaumdichte oder spritzdichte Zusammenpressen der Endbereiche durch die beweglichen Oberflächenbereiche wird in diesem Fall durch die Wände der Leiste auf die Endbereiche übertragen. Vorzugsweise ist die Leiste plastisch verformbar, so dass die Leiste im gleichen Schritt am Bauteil fixiert wird.

Eine vorteilhafte zweite Variante des Verfahrens sieht vor, dass ein Träger, welcher einen Steg aufweist, in der ersten Werkzeughälfte angeordnet wird, so dass der Steg in die Kavität des Werkzeugs hineinragt, und die Häute in der zweiten Werkzeughälfte auf die Weise eingelegt werden, dass die Häute mit ihren abgewinkelten Endbereichen zumindest bereichsweise übereinander liegen und die Endbereiche in die Kavität des Werkzeugs hineinragen, wobei Steg des Trägers und Endbereiche der Häute so angeordnet werden, dass während des Hinterschäumens oder Hinterspritzens die übereinander liegenden Endbereiche der Häute durch die Schaummasse oder Spritzgussmasse zumindest teilweise an den Steg des Trägers gepresst werden.

Der Steg ist notwendig, um die Nahtlinie der Häute zu positionieren und zu stabilisieren. Er bildet eine Wand, die die Form und Lage der Endbereiche bestimmt. Diesbezüglich ist es insbesondere vorteilhaft, wenn der Steg senkrecht zum Träger und zur Oberfläche der Häute angeordnet ist. Auch muss der Steg eine gewisse Höhe haben, um genannte Funktionen erfüllen zu können. Der Bereich, in dem man die Höhe des Stegs variieren kann, ist insbesondere abhängig von der Dicke der Zwischenschicht, d.h., vom Abstand zwischen Träger und Deckschicht. Vorteilhaft ist aber eine Höhe des Stegs von mindestens 5mm.

Während des Hinterschäumens oder Hinterspritzens werden durch den Druck des Schaums bzw. der Spritzgussmasse die Häute gegen den Träger bzw. Steg gedrückt und damit abgedichtet, so dass kein Schaum oder Spritzmasse in den Sichtbereich austritt.

Vorteilhaft ist allerdings ein teilweises Eindringen des Schaums bzw. der Spritzmasse zwischen die Häute und zwischen Häute und Steg zwecks Fixierung und Verklebung der Häute miteinander und von Häute und Steg. Dies kann dadurch erreicht werden, dass die stegäußere Haut kürzer ist als die steginnere Haut, wodurch das teilweise Eindringen des Schaums bzw. der Spritzmasse in die Zwischenbereiche Dekorfolie-Haut und Steg-Haut erleichtert wird.

Eine vorteilhafte Weiterbildung der zweiten Variante des Verfahrens sieht vor, dass in der Werkzeughälfte, in der die Häute platziert werden, ein Schwert zur Erzeugung einer Nut im Schnittstellenbereich zweier Häute angeordnet wird.

Wird ein Schwert verwendet, so wird eine Haut an der einen Seite des Schwertes angelegt, die andere Haut an der anderen Seite des Schwerts, und die Endbereiche der Häute oberhalb des Schwerts, in die Kavität hineinragend, einander überdeckend zusammengeführt. Die Lage des Schwerts ist dabei mit der Lage des Stegs des Trägers abgestimmt, so dass beim Hinterschäumen oder Hinterspritzen der Überdeckungsbereich der Häute zumindest teilweise an den Steg gepresst wird.

Durch das Schwert ist der Verlauf der Nahtlinie zwischen den beiden Häuten exakt festgelegt.

Je nach Höhe und Breite des Schwerts weist das Bauteil nach Fertigstellung entlang der Nahtlinie eine Nut auf, die den Maßen des Schwerts entspricht. Durch das Schwert wird somit ein optischer Effekt der Dekoroberfläche erzeugt. Über die Änderung der Abmaße des Schwerts kann dieser optische Effekt verändert werden.

Des weiteren wird ein Werkzeug offenbart, mit dem sich insbesondere das erfindungsgemäße Verfahren ausführen lässt.

Das Werkzeug weist eine eine Kavität bildende erste und zweite Werkzeughälfte auf, wobei die zweite Werkzeughälfte im Bereich der Kavität bewegliche Oberflächenbereiche aufweist, mittels derer von der Kavität weggerichtete abgewinkelte Endbereiche zumindest zweier in der Kavität eingelegter Häute zumindest bereichsweise zusammenpressbar sind.

Der Begriff "beweglich" umschließt in diesem Zusammenhang insbesondere auch die Verformbarkeit.

Durch die beweglichen Oberflächenbereiche ist ein Spalt bildbar bzw. dessen Spaltvolumen veränderbar für die Aufnahme und das Zusammenpressen der Endbereiche zumindest zweier Häute.

Wesentlich ist hierbei die Veränderung des Spaltvolumens. Die Mittel zum Umsetzen dieser Veränderung können nahezu beliebig gewählt werden. Beispielsweise ist das Spaltvolumen veränderbar durch die Verformung verformbarer Seitenwände, die relative Bewegung formstabiler Seitenwände, Schieber, die sich in das Spaltvolumen einfahren lassen, oder ausdehnbare Elemente.

Eine vorteilhafte Weiterbildung des Werkzeugs sieht vor, dass die zweite Werkzeugshälfte an der Oberfläche der Kavität einen durch in ihrer Form und relativen Lage unveränderbare Seitenwände gebildeten Spalt für die Aufnahme abgewinkelter Endbereiche zumindest zweier Häute aufweist, wobei zumindest an einer Seitenwand eine längs des Spaltes verlaufende Klemmeinrichtung angeordnet ist, durch die das Spaltvolumen verringerbar ist und somit die vom Spalt aufgenommenen Endbereiche der Häute zusammenpressbar sind.

Insbesondere ist auch eine Klemmeinrichtung möglich, die an beiden Seitenwänden des Spaltes angeordnet ist. Bevorzugt ist allerdings aufgrund der Kosten nur eine einseitige Klemmeinrichtung. In diesem Falle würden die gegeneinander beweglichen Oberflächenbereiche zum einen von der Druckfläche der Klemmeinrichtung und zum anderen von der Seitenwand gebildet werden, gegen die die Klemmeinrichtung die eingelegten Endbereiche der Häute drücken würde.

Vorzugsweise weist die Klemmeinrichtung ein verschiebbares starres Element, vorzugsweise einen verstellbaren Schieber oder ein in seiner Ausdehnung veränderbares Element, vorzugsweise einen elastischen Schlauch, auf.

Bevorzugt ist ein elastischer, aufblasbarer Schlauch, der in einer Nut, welche in einer der Seitenwände des Spaltes angebracht ist, geführt wird.

Vorzugsweise weist die zweite Werkzeughälfte eine an die Kavität grenzende Aussparung mit einem in die Aussparung eingesetzten Einsatz auf, wobei durch den Einsatz die eine Seitenwand des Spaltes gebildet wird, und durch die eine Innenwand der Aussparung die andere Seitenwand des Spaltes gebildet wird.

Ein derartiger Einsatz erleichtert das Einrichten, insbesondere das nachträgliche Einrichten, und das Warten der Klemmeinrichtung, da durch Herausnahme des Einsatzes Arbeitsraum geschaffen werden kann. Des weiteren erlaubt ein Wechseln des Einsatzes die Spaltbreite zu verändern.

Eine weitere vorteilhafte Weiterbildung des Werkzeugs sieht vor, dass die zweite Werkzeughälfte sich in zumindest gegeneinander verschiebbare formstabile Werkzeugunterteile unterteilt, durch die die beweglichen Oberflächenbereiche gebildet werden, wobei die Werkzeugteile derart ausgebildet sind, dass durch Bewegen der Werkzeugunterteile im Bereich der Kavität ein Spalt bildbar und wieder schließbar ist für die Aufnahme und das Zusammenpressen abgewinkelter Endbereiche zumindest zweier Häute.

Mit einem derartigen Werkzeug ist es möglich, die Endbereiche eingelegter Häute unter sehr hohem Druck zusammenzupressen.

Vorzugsweise weist zumindest ein Werkzeugunterteil im Bereich des Spaltes eine längs des Spaltes verlaufende Dichtung aus einem gummiartigen Material auf.

Eine derartige Dichtung verhindert die Schädigung der Häute beim Zusammenpressen. Als gummiartiges Material eignet sind beispielsweise ein Hartgummi. Insbesondere kann eine derartige Dichtung beidseitig des Spaltes angeordnet sein.

Vorzugsweise ist im Bereich des Spaltes eine längs des Spaltes verlaufende Schneidvorrichtung, vorzugsweise ein Stanz- oder Zackenmesser, angeordnet zum Trennen eines Überstandes von im Spalt aufgenommenen Endbereichen von Häute.

Der Schritt, den Überstand nachträglich zu entfernen, bzw. der Schritt, die Endbereiche mit der exakten Länge auszubilden, entfällt damit. Des weiteren ist es möglich, auf diese Weise den Überstand auf eine Länge zurückzuschneiden, welche unterhalb der Länge zum Erzielen der notwendigen Dichtwirkung liegt.

Eine weitere vorteilhafte Weiterbildung des Werkzeugs sieht vor, dass die zweite Werkzeughälfte eine an die Kavität grenzende Aussparung mit einem in die Aussparung eingesetzten Einsatz aus einem zumindest teilweise verformbaren und elastischen Material aufweist, durch den die beweglichen Oberflächenbereiche gebildet werden, wobei der Einsatz einen Spalt für die Aufnahme abgewinkelter Endbereiche zumindest zweier Häute aufweist, sowie einer Druckeinrichtung, mittels derer über Ausübung von Druck auf die elastischen flexiblen Einsatz der Einsatz zumindest im Bereich des Spaltes verformbar ist, so dass der Spalt durch Druckeinwirkung zu öffnen und zu schließen ist, insbesondere abgewinkelte Endbereiche zumindest zweier Häute durch Öffnen aufnehmbar und durch Schließen zusammenpressbar sind.

Ein derartiges Werkzeug ist kostengünstig herzustellen und einfach zu warten. Insbesondere können schon vorhandene Werkzeuge ohne großen Aufwand nachgerüstet werden.

Zum einen ermöglicht die Verformbarkeit des Materials, den Einsatz im Bereich des Spaltes zum Aufnehmen und Zusammenpressen von Endbereichen von Häute zu verformen. Die Elastizität des Einsatzes gewährleistet, dass der Einsatz eine Grundform beibehält, insbesondere bei Ausübung von Druck durch die Druckeinrichtung bei jedem neuen Öffnungs- und Schließvorgang gleichartig verformt wird.

Des Weiteren verhindert die Verformbarkeit des Einsatzes eine Schädigung eingelegter Häute. Die Elastizität gewährleistet die gewünschte Lage der Endbereiche.

In einer ersten bevorzugten Variante weist die Druckeinrichtung einen innerhalb des Einsatzes im Bereich des Spaltes längs des Spaltes verlaufenden Hohlraum auf, an welchem ein Über- oder Unterdruck anlegbar ist.

Durch Anlegen von Über- oder Unterdruck ist der Hohlraum zu vergrößern bzw. zu verkleinern. Entsprechend wird der Spalt verformt. Dies wird für die Aufnahme und das Zusammenpressen der Endbereiche von Häuten ausgenutzt. Dadurch, dass das Zusammenpressen der Endbereiche durch Druckluft unterstützt werden kann, kann insbesondere eine hohe Dichtwirkung erzielt werden.

Ein derartiger Hohlraum lässt sich beispielsweise rechtsseitig, linksseitig oder auch beidseitig des Spaltes vorsehen. Ebenfalls ist ein Hohlraum möglich, der unterhalb des Spaltes angeordnet ist. Des weiteren kann die Befüllung der Hohlräume für die Ausübung eines Druckes mit einem Gas, beispielsweise Luft, oder einem Fluid, beispielsweise Öl, erfolgen.

Eine zweite Variante sieht vor, dass der Einsatz beidseitig des Spaltes in der Aussparung fixiert ist, und die Druckeinrichtung zwischen Einsatz und Boden der Aussparung unterhalb des Spaltes angeordnet ist, wobei die Druckeinrichtung derart ausgebildet ist, dass ein Druck auf den Einsatz in Spaltrichtung ausübbar ist, so dass durch Ausüben von Druck auf den Einsatz der Spalt aufbiegbar für die Aufnahme abgewinkelter Endbereiche und schließbar für das Zusammenpressen der Endbereiche zumindest zweier Häute ist.

Im Gegensatz zu ersten Variante ist die Druckeinrichtung außerhalb des Einsatzes angeordnet. Dies ermöglicht es, den Einsatz als kompaktes, massives Element, insbesondere ohne Hohlräume wie oben beschrieben, auszubilden.

Aufgrund dessen, dass die Druckeinrichtung außerhalb des Einsatzes liegt, kann die Druckeinrichtung flexibel an die notwendigen Bedingungen angepasst werden.

Vorzugsweise weist die Druckeinrichtung ein verschiebbares starres Element, vorzugsweise einen verstellbaren Schieber oder ein in seiner Ausdehnung veränderbares Element, vorzugsweise einen elastischen Schlauch auf.

Vorzugsweise ist der Einsatz zumindest über seinen Randbereich formschlüssig in der Aussparung fixiert.

Dies ermöglicht eine einfache und dauerhafte Fixierung des Einsatzes in der Aussparung. Andere Befestigungsmittel sind natürlich ebenfalls möglich.

Vorzugsweise ist in beiden genannten Varianten der Einsatz einteilig.

Als Material eignet sich beispielsweise Silikon. Silikon wird erfindungsgemäß bevorzugt, da Häute aus diesem Material nicht haften bleiben. Des weiteren sind derartige Silikoneinsätze einfach herstellbar.

Grundsätzlich können aber auch andere elastische Materialien, beispielsweise EPDM, für zumindest einen Bereich des Einsatzes, verwendet werden.

Des Weiteren wird ein Bauteil, offenbart welches sich insbesondere gemäß des erfindungsgemäßen Verfahrens herstellen lässt.

Das Bauteil enthält eine mehrteilige Deckschicht, einen Träger, mindestens zwei die Deckschicht bildende Häute mit abgewinkelten Endbereichen und eine sich zwischen dem Träger und den Häuten befindende Schaumschicht, wobei der Träger einen in die Schaumschicht hineinragenden Steg aufweist, an dem an einer Seite die übereinander liegenden Endbereiche der Häute flächig anliegen.

Die Nahtlinie der Häute ist durch den Verlauf des Stegs bestimmt. Der Steg selber ist Bestandteil des Trägers. Dies macht weitere Komponenten zur Positionierung der Nahtlinie überflüssig. Der Steg sichert die Lage der Häute im Grenzbereich.

Vorzugsweise sind die Häute miteinander, besonders bevorzugt auch mit dem Steg, kraftschlüssig oder stoffschlüssig verbunden.

Unter dem Begriff "kraftschlüssig" soll hier in diesem Zusammenhang auch ein Verschmelzen zweier benachbarter Stoffe mit einbegriffen sein.

Aufgrund der kraftschlüssigen oder stoffschlüssigen Verbindung der Endbereiche der Häute sind die Häute miteinander am Steg fixiert. Zusätzliche Verbindungsmittel, wie beispielsweise Nähte, Klemmleisten oder Klebstoffe, sind unnötig.

Eine vorteilhafte Weiterbildung des Bauteils sieht vor, dass der Steg senkrecht auf der Grundfläche des Trägers steht.

Diese Weiterbildung ist insbesondere dann vorteilhaft, wenn in dem Bereich, in dem der Steg verläuft, Träger und Häute in parallelen Ebenen verlaufen. In diesem Fall steht der Steg nicht nur senkrecht auf dem Träger, sondern er ist auch senkrecht zu der Oberfläche der Häute orientiert. Dadurch wird der gewünschte Verlauf der Nahtlinie der Häute erreicht.

Eine vorteilhafte Weiterbildung des Bauteils sieht vor, dass das Bauteil im Schnittstellenbereich zweier benachbarten Häute eine Nut aufweist.

Eine weitere vorteilhafte Weiterbildung des Bauteils sieht vor, dass der Träger ein Thermoplast ist.

In Frage kommende Thermoplasten sind beispielsweise PP (Polypropylen), ABS (Acrylnitil-Butadien-StyrolCopolymer), SMA (Styrol-Maleinsäure-Copolymer) und das Blend ABS/PC (PC=Polycarbonat).

Eine weitere vorteilhafte Weiterbildung das Bauteils sieht vor, dass zumindest eine der Häute ein Thermoplast ist.

Die Thermoplastiztät zumindest einer der Häute ermöglicht, dass die Endbereiche der Häute im Herstellungsprozess des Bauteils sich miteinander durch verschmelzen/anschmelzen verbinden.

Geeignete Materialien für Häute wurden schon weiter oben genannt.

Eine weitere vorteilhafte Weiterbildung das Bauteils sieht vor, dass die Schaumschicht aus geschäumtem Polyurethan besteht.

Die Erfindung wird nun anhand von mehreren Ausführungsbeispielen erläutert, welche zumindest teilweise durch Figuren dargestellt werden. Dabei zeigt:
- Figur 1: eine erste Ausführungsform eines Werkzeuges sowie den Zustand einer ersten Ausführungsform des erfindungsgemäßen Verfahrens nach Abschluss des Schäumprozesses;
- Figur 2: einen Ausschnitt einer zweiten Ausführungsform eines Werkzeuges, sowie den Zustand einer zweiten Ausführungsform des erfindungsgemäßen Verfahrens nach Einlegen der Häute;
- Figur 3: eine dritte Ausführungsform eines Werkzeuges, sowie den Zustand einer dritten Ausführungsform eines erfindungsgemäßen Verfahrens nach Abschluss des Schäumprozesses;
- Figur 4: eine vierte Ausführungsform eines Werkzeuges, sowie eine vierte Ausführungsform des erfindungsgemäßen Verfahrens im Zustand nach dem Einlegen der Häute in das Werkzeug (Figur 4a), und nach dem Zusammenpressen der Endbereiche der beiden eingelegten Häute (Figur 4b); und
- Figur 5: ein Bauteil mit einer zweiteiligen Deckschicht hergestellt nach dem erfindungsgemäßen Verfahren.

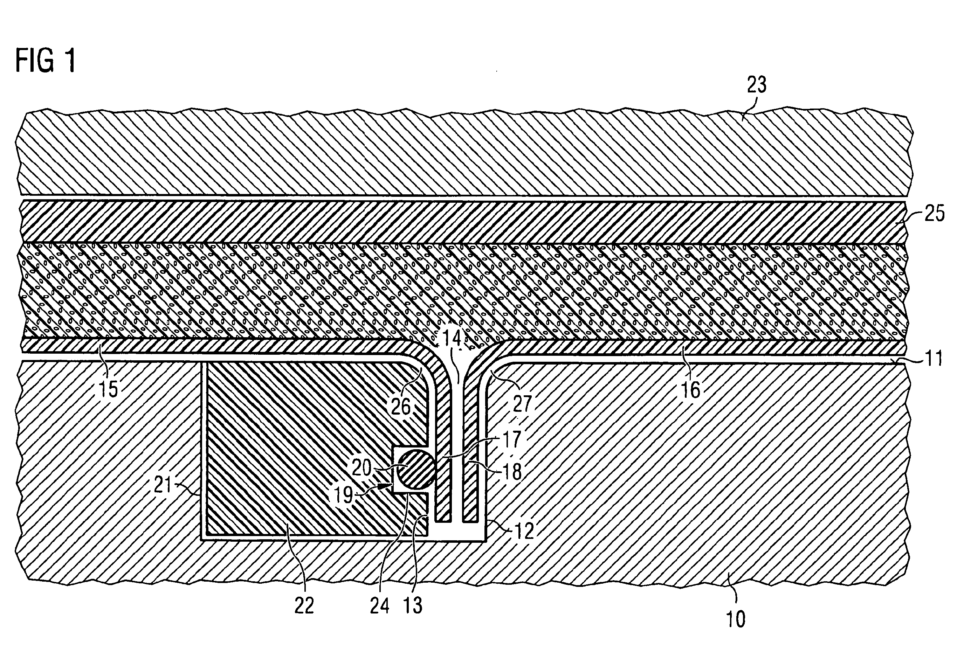

Figur 1 zeigt eine erste Ausführungsform eines Werkzeuges, hier ein Schäumwerkzeug, sowie eine erste Ausführungsform eines erfindungsgemäßen Verfahrens in dem Zustand nach Abschluss des Hinterschäumprozesses.

Das Schäumwerkzeug weist eine erste Werkzeugshälfte 23 und eine zweite Werkzeughälfte 10 auf, die gemeinsam eine Kavität bilden.

Die zweite Werkzeughälfte 10 weist an der Oberfläche 11 der Kavität einen durch in ihrer Form und relativen Lage unveränderbare Seitenwände 12, 13 gebildeten Spalt 14 für die Aufnahme abgewinkelter Endbereiche 17, 18 zumindest zweier Häute 15, 16 auf.

An einer Seitenwand 13 ist eine längs des Spaltes 14 verlaufende Klemmeinrichtung 19 angeordnet, durch die das Spaltvolumen verringerbar ist und somit die vom Spalt 14 aufgenommenen Endbereiche 17, 18 der Häute 15, 16 zusammenpressbar sind.

Die Klemmeinrichtung 19 enthält in diesem Ausführungsbeispiel einen aufblasbaren, elastischen Schlauch 20, welcher in einer für die Aufnahme des Schlauches 20 vorgesehenen, in der Seitenwand 13 eingebrachten Nut 24 angeordnet ist. Alternativ wäre auch ein verschiebbares starres Element, beispielsweise ein verstellbarer Schieber, verwendbar.

Die gegenüberliegende andere Seitenwand 12 wird gebildet durch eine Innenwand einer in der zweiten Werkzeughälfte 10 vorgesehenen Aussparung 21. Diese Aussparung verläuft entlang der vorgesehenen Trennlinie der beiden Häute 15 und 16, und weist in diesem Ausführungsbeispiel ein in etwa rechteckförmiges Profil auf.

In die Aussparung 21 ist ein formstabiler, ebenfalls im Profil etwa rechteckförmiger Einsatz 22 eingesetzt. Der Einsatz 22 liegt mit einer Seite flächig an einer Innenwand der Aussparung 21 an sowie flächig auf dem Boden der Aussparung 21 auf, und schließt bündig mit dem Rand der Aussparung 21 ab.

Der Einsatz 22 ist in der Breite seines Profils schmaler als die Breite der Aussparung 21, so dass zwischen der einen Innenwand der Aussparung 12 und der gegenüber liegenden Seitenwand 13 des Einsatzes 22 der Spalt 14 gebildet wird.

Die Nut 24 mit in der Nut 24 angeordnetem Schlauch 20 sind in dieser Ausführungsform in der Seitenwand 13 des Einsatzes 22 vorgesehen.

Die aufblasbare Dichtung 20 und die gegenüber liegende Seitenwand 12 der Aussparung 21 bilden gegeneinander bewegliche Oberflächenbereiche der zweiten Werkzeughälfte. Mittels dieser beweglichen Oberflächenbereiche sind die von der Kavität weg gerichteten abgewinkelten Endbereiche 17, 18 zumindest zweier in der Kavität eingelegter Häute 15, 16 bereichsweise zusammenpressbar.

Gemäß einer ersten Ausführungsform des erfindungsgemäßen Verfahrens werden zunächst zwei Häute 15, 16 mit abgewinkelten Endbereichen 17, 18 auf diese Weise in die zweite Werkzeughälfte 10 eingelegt, dass die abgewinkelten Endbereiche 17, 18 der Häute 15, 16 in dem Spalt 14 mit gleicher Ausrichtung der Abwinklung nebeneinander zu liegen kommen. Die abgewinkelten Endbereiche sind damit von der Kavität weggerichtet. Ein Träger 25 wird in die erste Werkzeugshälfte eingelegt. Danach wird eine Schaummasse in die Kavität eingebracht, das Schäumwerkzeug geschlossen und der Schäumprozess gestartet.

Vor dem Starten des Schäumprozesses werden die Endbereiche 17, 18 der Haut in dem Bereich, in dem sie übereinander liegen, durch Aufblasen des elastischen Schlauches 20 gegen die Seitenwand 12 der Aussparung 21 gedrückt und damit schaumdicht zusammengepresst. Form und Lage der zusammengepressten Endbereiche werden somit im wesentlichen durch die Seitenwand 12 festgelegt. Auf diese Weise ist ein exakter Verlauf der Trennlinie der beiden Häute 15 und 16 möglich.

In diesem Ausführungsbeispiel sind die Kanten 26, 27 des Spaltes 14, an denen die Häute 15, 16 im Bereich ihrer Abwinkelung anliegen, leicht gerundet. Damit wird eine Schädigung der Häute 15, 16 in ihrem Grenzbereich verhindert.

In diesem Ausführungsbeispiel bestehen die Häute 15 und 16 aus einem Thermoplasten, weisen aber unterschiedliche Farben auf. Durch Vorerwärmen der Häute 15 und 16, sowie durch eine erhöhte Temperatur des Schäumwerkzeuges werden die Endbereiche 17 und 18 unter Druck des aufgeblasenen elastischen Schlauches 20 leicht miteinander verschmolzen.

Nach dem Abschluss des Schäumvorganges wird der Schlauch 20 entlüftet, das Werkzeug geöffnet und das Bauteil mit einer zweifarbigen Dekoroberfläche entnommen.

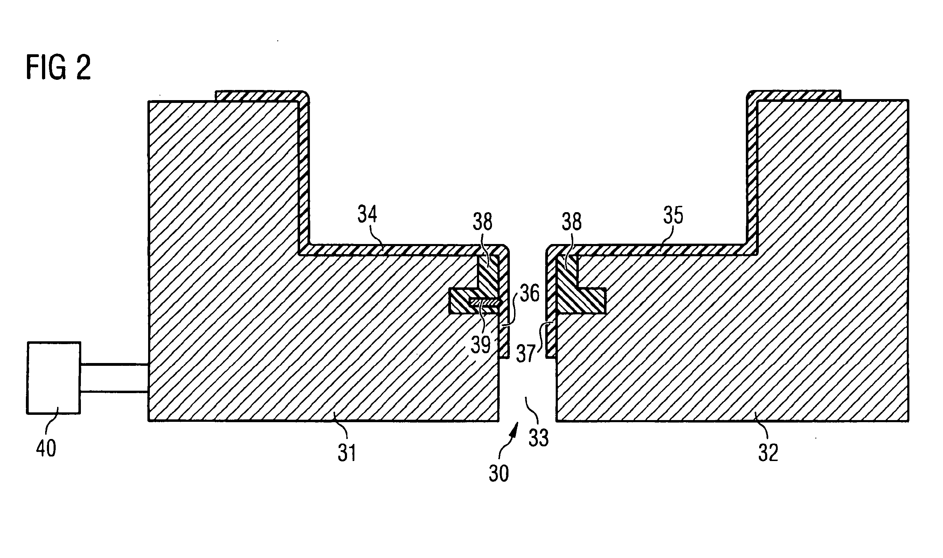

Figur 2 zeigt einen Ausschnitt einer zweiten Ausführungsform eines Werkzeuges, sowie eine zweite Ausführungsform des erfindungsgemäßen Verfahrens im Zustand nach dem Einlegen zweier Häute 34, 35 in die zweite Werkzeughälfte 30 des Werkzeugs.

Das Werkzeug, hier ein Schäumwerkzeug, weist eine eine Kavität bildende erste Werkzeugshälfte (nicht gezeigt) und zweite Werkzeugshälfte 30 auf.

Die zweite Werkzeugshälfte 30 unterteilt sich in zwei translatorisch gegeneinander verschiebbare formstabile Werkzeugunterteile 31, 32. In diesem Ausführungsbeispiel ist das Werkzeugunterteil 32 fixiert, und das Werkzeugunterteil 31 mittels eines Hydraulikzylinders 40 verschiebbar gelagert. Werkzeugunterteil 31 und 32 bilden die gesamte Oberfläche der Kavität der zweiten Werkzeughälfte. Damit wird verhindert, dass, abgesehen von einem Spalt 33 zwischen den beiden Werkzeugunterteilen 31 und 32, weitere unnötige Spalte an der Oberfläche der Kavität entstehen. Die Werkzeugunterteile 31 und 32 stellen gegeneinander bewegliche Oberflächenbereiche dar, durch die oben schon genannter Spalt 33 bildbar und wieder schließbar ist für die Aufnahme und das Zusammenpressen abgewinkelter Endbereiche 36, 37 zumindest zweier Häute 34, 35.

Beide Werkzeugunterteile 31 und 32 weisen im Bereich des Spaltes eine längs des Spaltes verlaufende Dichtung aus einem gummiartigen Material auf. Die Dichtfläche beträgt etwa 5-8mm. Damit wird eine Beschädigung der eingelegten Häute 34, 35 beim Schließen des Spaltes 33 verhindert sowie eine gleichmäßigere Druckverteilung erreicht.

Des Weiteren ist im Bereich des Spaltes 33 in dem einen Werkzeugunterteil 31 eine längs des Spaltes 33 verlaufende Schneidvorrichtung, in diesem Falle ein Stanz- oder Zackenmesser 39, zum Trennen eines Überstandes von im Spalt aufgenommenen Endbereichen 36, 37 von Häuten 34, 35 vorgesehen. Auf dem gegenüber liegenden Werkzeugteil 32 ist eine Hartgummivorrichtung oder alternativ, eine eingefräste Nut vorgesehen, in die das Messer beim Schließvorgang der Werkzeugunterteile 31, 32 einfährt.

Alternativ zu einem hydraulischen Zylinder kann beispielsweise auch ein Kniehebel eingesetzt werden.

Nach einer zweiten Ausführungsform des erfindungsgemäßen Verfahrens werden zwei Häute 34, 35 mit abgewinkelten Endbereichen 36, 37 in die zweite Werkzeughälfte in jeweils eines der Werkzeugteile 31 und 32 eingelegt, so dass die abgewinkelten Endbereiche 36 und 37 mit gleicher Ausrichtung der Abwinklung nebeneinander im Spalt 33 liegen, der von den auseinander geschobenen Werkzeugunterteilen 31 und 32 gebildet wird. Nach dem Einlegen der Häute 34, 35 wird der Spalt 33 durch Verschieben des bewegbaren Werkzeugunterteils 31 geschlossen. Im Zuge dessen kommen die beiden Endbereiche 36 und 37 in Deckung und werden schaumdicht zusammengepresst. Form und Lage der den Spalt 33 bildenden Seitenwände der Werkzeugunterteile 31 und 32 bestimmen dabei die Form und Lage der zusammengepressten Endbereiche.

Nachdem die Endbereiche 36 und 37 schaumdicht zusammen gepresst worden sind, kann das Verfahren analog zum Verfahren in der ersten Ausführungsform fortgesetzt werden. In diesem Ausführungsbeispiel besteht die eine Haut 34 aus Polyurethan, die andere Haut 35 aus TPO.

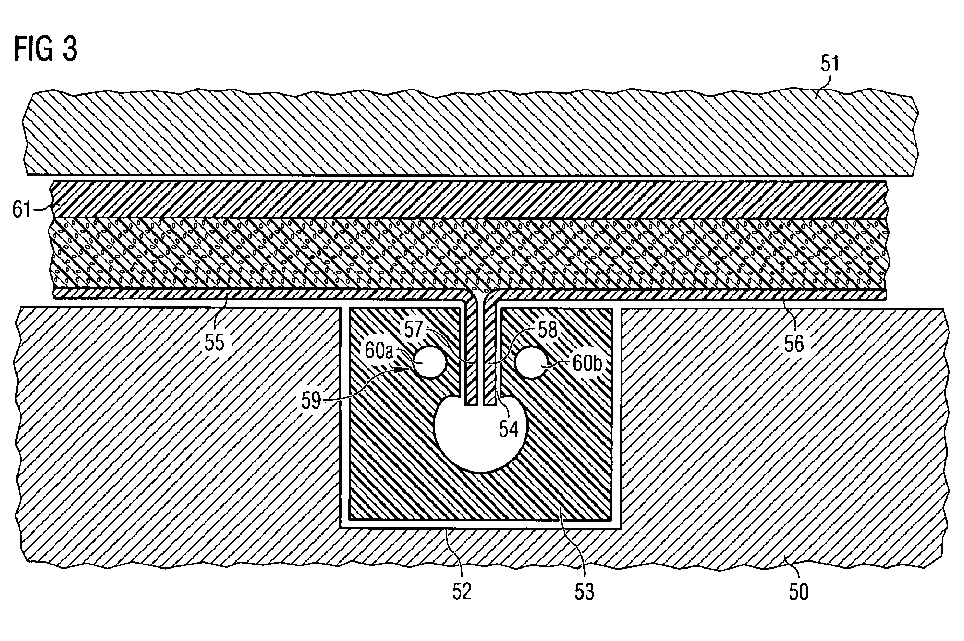

Figur 3 zeigt eine dritte Ausführungsform eines Werkzeuges sowie eine dritte Ausführungsform eines erfindungsgemäßen Verfahrens im Zustand nach Abschluss des Hinterschäumens.

Das Werkzeug, hier wiederum ein Schäumwerkzeug, weist eine eine Kavität bildende erste Werkzeughälfte 51 und zweite Werkzeughälfte 50 auf. Des weiteren weist die zweite Werkzeughälfte 50 eine an die Kavität grenzende Aussparung 52 mit einem in die Aussparung eingesetzten Einsatz 53 aus einem verformbaren und elastischen Material auf. In seiner Mitte weist der Einsatz einen Spalt 54 für die Aufnahme abgewinkelter Endbereiche 57, 58 zumindest zweier Häute 55, 56 auf.

Des Weiteren sind innerhalb des Einsatzes 53 rechts und linksseitig des Spaltes längs des Spaltes verlaufende Hohlräume vorgesehen, welche Teil einer Druckeinrichtung 59 sind, und an welchen ein Über- oder Unterdruck anlegbar ist. Die Hohlräume sind derart ausgebildet und angeordnet, dass durch eine Druckänderung in den Hohlräumen der elastische verformbare Einsatz im Bereich des Spaltes 44 derart verformbar ist, dass der Spalt durch Anlegen eines Unterdruckes zu öffnen und durch Anlegen eines Überdruckes zu schließen ist, insbesondere abgewinkelte Endbereiche 57, 58 zumindest zweier Häute 55, 56 durch Anlegen eines Unterdruckes und Öffnen des Spaltes aufnehmbar und durch Anlegen eines Überdruckes zusammenpressbar sind. Um dies zu erleichtern mündet der in seinem Profil im wesentlichen rechteckförmige Spalt 54 in eine in ihrem Profil im wesentlichen runde Aushöhlung. Durch diese Aushöhlung wird gewährleistet, dass sich die Seitenwände des Spaltes 54 durch Anlegen von unterschiedlichen Drücken in den Hohlräumen 60a und 60b sinnvoll zum Öffnen und Schließen des Spaltes 54 verformen.

In diesem Ausführungsbeispiel hat die Aussparung 52 ein rechteckförmiges Profil und verläuft entlang der vorgesehenen Trennlinie der beiden Häute 55 und 56. Der Einsatz 53 hat ebenfalls ein rechteckförmiges Profil, welches dem Profil der Aussparung 52 entspricht. Damit liegt der Einsatz 53 bündig in der Aussparung 52.

Der Einsatz 53 ist in diesem Ausführungsbeispiel einteilig und besteht aus Silikon.

Gemäß einer dritten Ausführungsform eines erfindungsgemäßen Verfahrens werden zunächst zwei Häute 55, 56 mit abgewinkelten Endbereichen 57, 58 in die zweite Werkzeughälfte 50 auf diese Weise eingelegt, dass die abgewinkelten Endbereiche 57, 58 der Häute 55, 56 mit gleicher Ausrichtung der Abwinklung nebeneinander im geöffneten Spalt 54 des Einsatzes 53 zu liegen kommen. Zum Öffnen des Spaltes 54 wird dabei ein ausreichender Unterdruck in den Hohlräumen 60a und 60b angelegt.

Nach Einlegen der Endbereiche 57, 58 der Häute 55, 56 in den Spalt 54 wird ein Überdruck an die Hohlräume 60a und 60b angelegt. Durch den Überdruck in den Hohlräumen bewegen sich die Seitenwände des Spaltes 54 aufeinander zu und pressen somit die im Spalt übereinander liegenden Endbereiche 57, 58 schaumdicht zusammen. Die Seitenwände des Spaltes 54 bestimmen dabei die Form und Lage der zusammengepressten Endbereiche 57 und 58.

Nach Anordnen eines Trägers 61 in der ersten Werkzeughälfte 51 wird eine Schaummasse in die Kavität eingebracht, das Werkzeug geschlossen, und der Schäumvorgang begonnen.

Das Ende des Schäumvorganges stellt Figur 3 dar.

Danach wird der Spalt 54 durch Anlegen eines Unterdruckes an die Hohlräume 60a und 60b geöffnet, das Werkzeug geöffnet, und das fertige Bauteil entnommen.

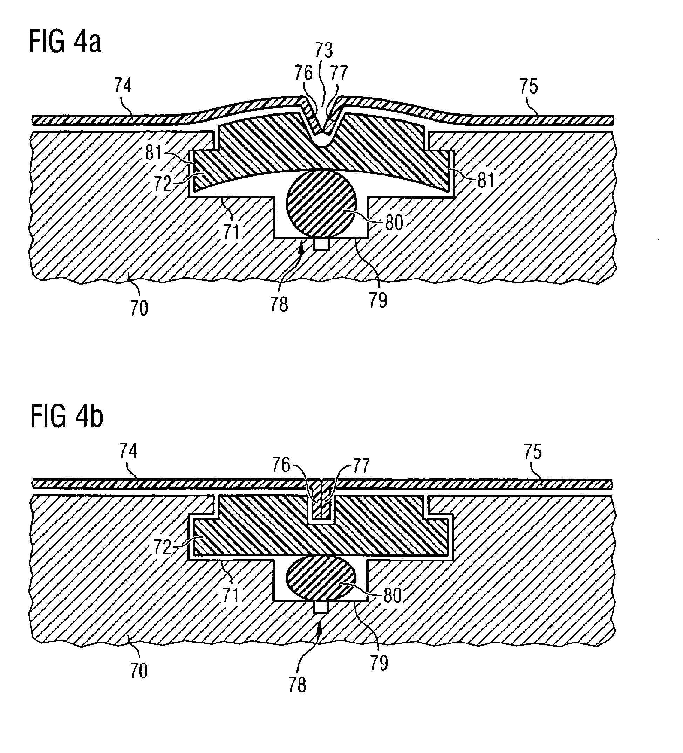

Figur 4 zeigt eine vierte Ausführungsform eines Werkzeuges, sowie eine vierte Ausführungsform eines erfindungsgemäßen Verfahrens, zum einen im Zustand, nachdem zwei Häute 74 und 75 in den geöffneten Spalt der zweiten Werkzeugshälfte eingelegt wurden (Figur 4a), und im Zustand, in dem die Endbereiche 76, 77 der Häute 74, 75 schaumdicht zusammengepresst werden (Figur 4b). Das Werkzeug weist eine eine Kavität bildende erste Werkzeughälfte (nicht gezeigt) und zweite Werkzeughälfte 70 auf. Die zweite Werkzeughälfte weist eine an die Kavität grenzende Aussparung 71 mit einem in die Aussparung eingesetzten Einsatz 72 aus einem verformbaren und elastischen Material auf.

In der Mitte weist der Einsatz 72 einen Spalt 73 für die Aufnahme abgewinkelter Endbereiche 76, 77 zumindest zweier Häute 74, 75 auf.

Des weiteren ist eine Druckeinrichtung 78, welche in diesem Ausführungsbeispiel einen aufblasbaren elastischen Schlauch beinhaltet, zwischen Einsatz 72 und Boden 79 der Aussparung unterhalb des Spaltes angeordnet.

Die Aussparung 71 hat ein im wesentlichen rechteckförmiges Profil und verläuft entlang der vorgesehenen Trennlinie der Häute 74 und 75. In der Mitte der Aussparung ist eine Nut vorgesehen, in der der elastische Schlauch 80 angeordnet ist. Die gegenüber liegenden Innenseiten der Aussparung 71 weisen einen Hinterschnitt auf, in den der Einsatz 72 formschlüssig aufgenommen werden kann.

Der Einsatz 22 entspricht in seinem Profil dem Profil der Aussparung 71, unter Auslassung der Nut, in dem der elastische Schlauch 80 angeordnet ist. Er schließt insbesondere bündig mit dem Rand der Aussparung 71 ab. Des weiteren ist der Einsatz 72 durch den Formschluss beidseitig des Spaltes 73 in der Aussparung 71 fixiert.

Ohne Überdruck im Schlauch 80 ist der Spalt 73 des Einsatzes 72 geschlossen. Durch Aufblasen des Schlauches 80 wird ein Druck auf die Unterseite des Einsatzes ausgeübt, der den Spalt 73 aufgrund der beidseitigen Fixierung der Aussparung 71 aufbiegt. Hierdurch kann der Spalt 73 so weit aufgebogen werden, dass die Endbereiche 76, 77 zweier Häute 74, 75 in den Spalt 73 eingelegt werden können (siehe Figur 4a).

Erniedrigt man nun den Druck im Schlauch 80, so geht der Einsatz 72 aufgrund seiner Elastizität in seinen Grundzustand über, d.h. der Spalt 73 schließt sich und presst auf diese Weise die im Spalt angeordneten Endbereiche 76, 77 der Häute 74, 75 zusammen (siehe Figur 4b).

Der Einsatz 72 ist in diesem Ausführungsbeispiel einteilig, massiv und besteht aus Silikon.

Anstelle des elastischen Schlauches kann auch eine andere Druckeinrichtung verwendet werden, beispielsweise ein verschiebbares starres Element, vorzugsweise ein verstellbarer Schieber.

Die vierte Ausführungsform eines erfindungsgemäßen Verfahrens sieht vor, bei geöffnetem Spalt 73 zumindest zwei Häute 74, 75 mit abgewinkelten Endbereichen 76, 77 in die zweite Werkzeughälfte auf diese Weise einzulegen, dass die abgewinkelten Endbereiche 76, 77 der Häute 74, 75 mit gleicher Ausrichtung der Abwinklung im geöffneten Spalt 73 nebeneinander liegen.

Danach wird der Spalt 73 wie oben beschrieben geschlossen, wodurch die übereinander liegenden Endbereiche 76, 77 schaumdicht zusammengepresst werden. Die Seitenwände des Spaltes 73 üben zum einen den notwendigen Anpressdruck auf die Endbereiche 76, 77 aus, zum anderen bestimmen sie deren Form und Lage. Nach dem Schließen des Spaltes 73 kann das Verfahren in analoger Weise zu den oben beschriebenen Ausführungsformen fortgesetzt werden.

In den beschriebenen Ausführungsformen wurden ausschließlich Schäumwerkzeuge und Schäumprozesse genannt. Die Ausbildung der Werkzeuge und die Verfahren lassen sich aber in analoger Weise auf Spritzgusswerkzeuge und Hinterspritzprozesse übertragen.

Des weiteren können die Endbereiche der Häute vor dem Einlegen in das Werkzeug mit einer Leiste eingefasst werden, oder die Leiste zunächst zwischen den beweglichen Oberflächenbereichen der zweiten Werkzeughälften angeordnet werden und darauf folgend die Endbereiche der Häute in die Leiste eingeführt werden, oder nach dem Hinterschäumen oder Hinterspritzen die Endbereiche der Häute mit einer Leiste eingefasst werden. Außer dem zuletzt genannten Fall muss dann allerdings möglicherweise die Spaltgröße und die Anpressdrücke aufgrund dieses zusätzlichen Elementes angepasst werden.

Als Vorteile des erfindungsgemäßen Verfahrens und damit verbundenen Werkzeuge ist zum einen die Herstellung von Bauteilen mit Oberflächen mit hoher Wertanmutung bei niedrigem Preis, die Möglichkeit schaumund haltfreier Zierleistenfugen, die Kombination einer Vielzahl von unterschiedlichen Häuten, beispielsweise aus zwei unterschiedlichen oder gleichen Werkstoffen, beispielsweise aus zwei sich in der Farbe unterscheidenden Werkstoffen, niedriger Auszugsgrad von Tiefziehfolien bei großen Bauteilen und das Fehlen eines zusätzlichen Prozesses zur Fügung der Haut zu nennen.

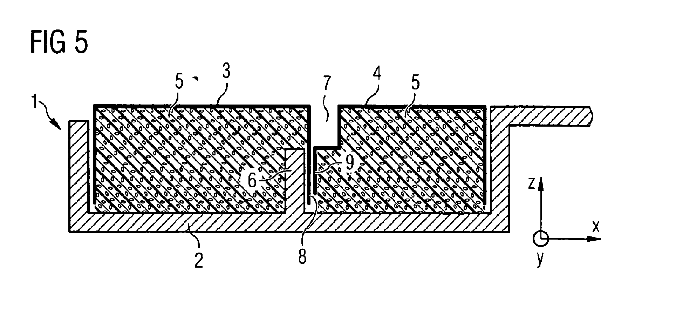

Die Figur 5 zeigt ein Bauteil 1 mit einer Dekoroberfläche, hier ein Innenverkleidungsteil eines Automobils. Das Bauteil 1 enthält einen Träger 2, zwei die Dekoroberfläche bildenden Häute 3, 4 und eine sich zwischen dem Träger 2 und Häute 3, 4 befindende Schaumschicht 5. Des Weiteren weist der Träger 2 einen Steg 6 auf, der senkrecht auf der Grundfläche des Trägers steht und in die Schaumschicht 5 hineinragt.

Die Häute 3 und 4 sind in einer gemeinsamen Ebene nebeneinander liegend auf der Schaumschicht 5 angeordnet. In ihrem gemeinsamen Schnittstellenbereich/Grenzbereich ist der Endbereich 8 der Haut 3 in Richtung Träger abgewinkelt, so dass der Endbereich 8 der Haut 3 sich senkrecht zum Träger befindet. Der Endbereich 9 der Haut 4 ist in Form einer Stufe in Richtung Träger abgewinkelt. Nach der Stufe überdecken sich die Endbereiche der Häute 3 und 4. Durch die Endbereiche der Häute 3 und 4 wird somit eine Nut 7 gebildet.

Die Überdeckung der Endbereiche der beiden Häute 3 und 4 ragt senkrecht in die Schaumschicht 5 hinein. Dabei grenzt die eine Seite der Überdeckung, die durch den Endbereich der Haut 3 gebildet wird, an den Steg 6 des Trägers 2, die andere Seite der Überdeckung, die durch den Endbereich der Haut 4 gebildet wird, grenzt an die Schaumschicht 5.

Die Höhe des Stegs 6 ist hierbei so gewählt, dass Boden der Nut 7 und Oberkante des Stegs 6 in einer gemeinsamen Ebene liegen.

Der Endbereich der Haut 3 geht tiefer in die Schaumschicht 5 hinein als der Endbereich der Haut 4. Somit grenzt auch ein kleiner Bereich der Haut 3 direkt an die Schaumschicht 5.

Als Material für den Träger wurde in diesem Beispiel Polypropylen verwendet. Die Haut 3 und die Haut 4 sind thermoformbare Folien aus einem thermoplastischen Elastomer. Die Schaumschicht 5 ist geschäumtes Polyurethan.

Hergestellt wurde das eben beschriebene Bauteil nach dem erfindungsgemäßen Verfahren in einem Schäumwerkzeug. Das Schäumwerkzeug besteht aus zwei Werkzeughälften. In der zweiten Werkzeughälfte ist ein Schwert angeordnet.

Bei geöffnetem Schäumwerkzeug wurde der Träger 2 in der ersten Werkzeughälfte angeordnet, so dass der Steg 6 in die Kavität des Schäumwerkzeugs hineinragte.

Die zwei Häute 3 und 4 wurden in der zweiten Werkzeughälfte auf die Weise angeordnet, dass eine Haut an der einen Seite des in der zweiten Werkzeughälfte angeordneten Schwertes flächig angrenzte, und die andere Haut an die andere Seite des Schwertes flächig angrenzte. Die Endbereiche 8, 9 der beiden Häute 3 und 4 wurden oberhalb des Schwertes zusammengeführt, so dass sie sich flächig überdeckten. In Position gehalten wurden die Häute durch Fixierung am Außenrand und durch Ansaugen mittels Vakuum.

Danach wurde das Werkzeug geschlossen und der Hinterschäumprozess gestartet. Durch das Hinterschäumen wurde der Überdeckungsbereich der beiden Häute an den Steg 6 gepresst. Dadurch, dass die Haut 4 etwas kürzer ist als die Haut 3, drang der Schaum teilweise in die Zwischenbereiche Haut 3 - Haut 4 und Steg - Haut 3 ein. Das Hinterschäumen führte zu einem kraftschlüssigen Verbund des Überlappungsbereichs der beiden Häute 3 und 4 sowie dem Steg 6.

Nach Beendigung des Hinterschäumvorgangs wurde das Bauteil entnommen.

Das so hergestellte Bauteil weist eine Dekoroberfläche auf, die aus zwei Häute 3 und 4 besteht. Die Schnittlinie der beiden Häute wird durch eine Nut 7 gebildet, die durch den Abdruck des Schwertes des Schäumwerkzeugs erzeugt wurde.

In diesem Ausführungsbeispiel sind Nut und Steg versetzt angeordnet. Es ist aber ebenfalls möglich, die Nut auch direkt über den Steg zu platzieren. Die Häute müssen dann entsprechend der Position von Steg und Schwert angeordnet werden.

## Patentansprüche

1. Verfahren zur Herstellung eines Innenverkleidungsteils für Kraftfahrzeuge mit einer Deckschicht mit zwei die Deckschicht bildenden Häuten in einem Werkzeug mit einer eine Kavität bildenden ersten Werkzeughälfte (23; 51) und zweiten Werkzeughälfte (10; 30; 50; 60), umfassend die Schritte:
a) Einlegen der zumindest zwei Häute (3, 4; 15, 16; 34, 35; 55, 56; 74, 75) mit abgewinkelten Endbereichen (8, 9; 17, 18; 36, 37; 57, 58; 76, 77) in die zweite Werkzeughälfte auf diese Weise, dass die abgewinkelten Endbereiche der Häute mit gleicher Ausrichtung der Abwinkelung nebeneinander liegen;
b) Hinterschäumen oder Hinterspritzen der Häute mit einer Schaummasse oder Spritzgussmasse, wobei
c) nach dem Einlegen der Häute die Endbereiche der Häute zumindest bereichsweise durch zumindest einseitiges Drücken der übereinander liegenden Endbereiche gegen eine die Form und Lage der zusammengepressten Endbereiche bestimmende Wand (6; 12; 38; 53; 72) schaumdicht oder spritzdicht zusammengepresst werden.

2. Verfahren nach Anspruch 1, **dadurch gekennzeichnet, dass** die Endbereiche (8, 9; 17, 18; 36, 37; 57, 58; 76, 77) der Häute (3, 4; 15, 16; 34, 35; 55, 56; 74, 75) nach dem Einlegen der Häute in die zweite Werkzeughälfte (10; 30; 50; 60) zumindest bereichsweise miteinander verschmolzen werden.

3. Verfahren nach einem der Ansprüche 1 oder 2, **dadurch gekennzeichnet, dass** mindestens eine der Häute (3, 4; 15, 16; 34, 35; 55, 56; 74, 75) aus einem Thermoplasten besteht bzw. bestehen.

4. Verfahren nach einem der Ansprüche 1 bis 3, **dadurch gekennzeichnet, dass** die Häute (15, 16; 34, 35; 55, 56; 74, 75) auf diese Weise eingelegt werden, dass die abgewinkelten Endbereiche (17, 18; 36, 37; 57, 58; 76, 77) der Häute (15, 16; 34, 35; 55, 56; 74, 75) von der Kavität des Werkzeugs weggerichtet sind, und während des Hinterschäumens oder des Hinterspritzens die Endbereiche der Häute durch im Bereich der Kavität liegende gegeneinander bewegliche Oberflächenbereiche (12, 20; 31, 32; 53; 72) der zweiten Werkzeughälfte (10; 30; 50; 60) zumindest bereichsweise zusammengepresst werden.

5. Verfahren nach einem der vorhergehenden Ansprüche, **dadurch gekennzeichnet, dass** die Endbereiche (17, 18; 36, 37; 57, 58; 76, 77) der Häute (15, 16; 34, 35; 55, 56; 74, 75) mit einer Zierleiste eingefasst werden.

6. Verfahren nach Anspruch 5, **dadurch gekennzeichnet, dass** die Endbereiche (17, 18; 36, 37; 57, 58; 76, 77) der Häute (15, 16; 34, 35; 55, 56; 74, 75) vor dem Einlegen der Häute in das Werkzeug mit einer Leiste eingefasst werden, oder die Leiste zunächst zwischen den beweglichen Oberflächenbereichen (12, 20; 31, 32; 53; 72) der zweiten Werkzeughälfte (10; 30; 50; 60) angeordnet wird und darauf folgend die Endbereiche der Häute in die Leiste eingeführt werden, oder nach dem Hinterschäumen oder Hinterspritzen die Endbereiche der Häute mit einer Leiste eingefasst werden.

7. Verfahren nach einem der Ansprüche 1 bis 3, wobei ein Träger (2), welcher einen Steg (6) aufweist, in der ersten Werkzeughälfte angeordnet wird, so dass der Steg (6) in die Kavität des Werkzeugs hineinragt, und die Häute (3, 4) in der zweiten Werkzeughälfte auf die Weise eingelegt werden, dass die Häute (3, 4) mit ihren abgewinkelten Endbereichen (8, 9) zumindest bereichsweise übereinander liegen und die Endbereiche in die Kavität des Werkzeugs hineinragen, wobei Steg (6) des Trägers (2) und Endbereiche der Häute (3, 4) so angeordnet werden, dass während des Hinterschäumens oder Hinterspritzens die übereinander liegenden Endbereiche (8, 9) der Häute (3, 4) durch die Schaummasse oder Spritzgussmasse zumindest teilweise an den Steg (6) des Trägers (2) gepresst werden.

8. Verfahren nach Anspruch 7, **dadurch gekennzeichnet, dass** in der Werkzeughälfte, in der die Häute (3, 4) platziert werden, ein Schwert zur Erzeugung einer Nut (7) im Schnittstellenbereich zweier Häute (3, 4) angeordnet wird.

## Claims

1. Method for the production of an interior lining part for automotive vehicles having a cover layer with two skins which form the cover layer in a tool having a cavity-forming first tool half (23; 51) and second tool half (10; 30; 50; 60), comprising the steps:
a) insertion of the at least two skins (3, 4; 15, 16; 34, 35; 55, 56; 74, 75) with angled-over end regions (8, 9; 17, 18; 36, 37; 57, 58; 76, 77) into the second tool half such that the angled-over end regions of the skins are situated adjacently with the same orientation of angling;
b) rear-foaming or rear-spraying of the skins with a foam material or injection moulding material,
c) after insertion of the skins, the end regions of the skins being pressed together in a foam-tight or spray-tight manner at least in regions by pressing at least on one side of the end regions which are situated one above the other against a wall (6; 12; 38; 53; 72) which determines the form and position of the pressed-together end regions.

2. Method according to claim 1, **characterised in that** the end regions (8, 9; 17, 18; 36, 37; 57, 58; 76, 77) of the skins (3, 4; 15, 16; 34, 35; 55, 56; 74, 75) are melted together at least in regions after insertion of the skins into the second tool half (10; 30; 50; 60).

3. Method according to one of the claims 1 or 2, **characterised in that** at least one of the skins (3, 4; 15, 16; 34, 35; 55, 56; 74, 75) comprises or comprise a thermoplastic material.

4. Method according to one of the claims 1 to 3, **characterised in that** the skins (15, 16; 34, 35; 55, 56; 74, 75) are inserted such that the angled-over end regions (17, 18; 36, 37; 57, 58; 76, 77) of the skins (15, 16; 34, 35; 55, 56; 74, 75) are directed away from the cavity of the tool and, during the rear-foaming or the rear-spraying, the end regions of the skins are pressed together at least in regions by means of mutually moveable surface regions (12, 20; 31, 32; 53; 72) of the second tool half (10; 30; 50; 60) situated in the region of the cavity.

5. Method according to one of the preceding claims, **characterised in that** the end regions (17, 18; 36, 37; 57, 58; 76, 77) of the skins (15, 16; 34, 35; 55, 56; 74, 75) are edged with a trim.

6. Method according to claim 5, **characterised in that** the end regions (17, 18; 36, 37; 57, 58; 76, 77) of the skins (15, 16; 34, 35; 55, 56; 74, 75) are edged with a strip before insertion of the skins into the tool, or the strip is disposed firstly between the moveable surface regions (12, 20; 31, 32; 53; 72) of the second tool half (10; 30; 50; 60) and subsequently the end regions of the skins are introduced into the strip, or the end regions of the skins are edged with a strip after rear-foaming or rear-spraying.

7. Method according to one of the claims 1 to 3, wherein a carrier (2) which has a web (6) is disposed in the first tool half so that the web (6) protrudes into the cavity of the tool, and the skins (3, 4) are inserted into the second tool half such that the skins (3, 4) are situated one above the other at least in regions with their angled-over end regions (8, 9) and the end regions protrude into the cavity of the tool, the web (6) of the carrier (2) and end regions of the skins (3, 4) being disposed such that, during rear-foaming or rear-spraying, the end regions (8, 9) of the skins (3, 4) which are situated one above the other are pressed at least partially against the web (6) of the carrier (2) by means of the foam material or injection moulding material.

8. Method according to claim 7, **characterised in that** a strut is disposed in the tool half in which the skins (3, 4) are placed in order to produce a groove (7) in the interface region of two skins (3, 4).

## Revendications

1. Procédé de fabrication d'une pièce de revêtement intérieur pour véhicules avec une couche de finition, deux membranes constituant cette couche, dans un outil avec une première moitié de l'outil (23 ; 51) formant une cavité, et une deuxième moitié de l'outil (10 ; 30 ; 50 ; 60), et comprenant les étapes suivantes :
a) pose des membranes (3, 4 ; 15, 16 ; 34, 35 ; 55, 56 ; 74, 75), au nombre d'au moins deux, avec leurs extrémités pliées (8, 9 ; 17, 18 ; 36, 37 ; 57, 58 ; 76, 77), dans la deuxième moitié de l'outil, de façon à ce que les extrémités pliées des membranes, avec la même direction de pliage, soient placées l'une à côté de l'autre ;
b) moussage arrière et/ou surmoulage arrière des membranes avec une matière expansée ou un composé de moulage par injection, où
c) les extrémités des membranes, après avoir été posées, sont pressées l'une contre l'autre au moins par parties et rendues ainsi étanches à la matière expansée ou au composé d'injection, grâce à une pression, exercée au moins d'un côté, des extrémités reposant l'une sur l'autre contre une paroi (6 ; 12 ; 38 ; 53 ; 72) qui détermine la forme et la position des extrémités ainsi pressées.

2. Procédé selon la revendication 1, **caractérisé en ce que** les extrémités (8, 9 ; 17, 18 ; 36, 37 ; 57, 58 ; 76, 77) des membranes (3, 4 ; 15, 16 ; 34, 35 ; 55, 56 ; 74, 75), après avoir été posées dans la deuxième moitié de l'outil (10 ; 30 ; 50 ; 60), sont fondues ensemble au moins par parties.

3. Procédé selon l'une des revendications 1 ou 2, **caractérisé en ce que** au moins l'une des membranes (3, 4 ; 15, 16 ; 34, 35 ; 55, 56 ; 74, 75) soit faite de matière thermoplastique.

4. Procédé selon l'une des revendications 1 à 3, **caractérisé en ce que** les membranes (15, 16 ; 34, 35 ; 55, 56 ; 74, 75) sont posées de telle façon que les extrémités pliées (17, 18 ; 36, 37 ; 57, 58 ; 76, 77) des membranes (15, 16 ; 34, 35 ; 55, 56 ; 74, 75) pointent vers l'extérieur de la cavité de l'outil, et qu'elles soient au moins par parties pressées l'une contre l'autre par certaines parties mobiles (12, 20 ; 31, 32 ; 53 ; 72) de la surface de la deuxième moitié de l'outil (10 ; 30 ; 50 ; 60), durant le moussage arrière ou le surmoulage arrière.

5. Procédé selon l'une des revendications précédentes, **caractérisé en ce que** les extrémités (17, 18 ; 36, 37 ; 57, 58 ; 76, 77) des membranes (15, 16 ; 34, 35 ; 55, 56 ; 74, 75) sont serties dans une baguette de décoration.

6. Procédé selon la revendication 5, **caractérisé en ce que** les extrémités (17, 18 ; 36, 37 ; 57, 58 ; 76, 77) des membranes (15, 16 ; 34, 35 ; 55, 56 ; 74, 75) sont serties à l'aide d'une baguette, ou bien **en ce que** la baguette est d'abord positionnée entre les pièces mobiles (12, 20 ; 31, 32 ; 53 ; 72) de la surface de la deuxième moitié de l'outil (10 ; 30 ; 50 ; 60), et les extrémités des membranes sont insérées dans la baguette par la suite, ou bien **en ce que** les extrémités des membranes sont serties dans une baguette après le moussage arrière ou le surmoulage arrière.

7. Procédé selon l'une des revendications 1 à 3, où un support (2) muni d'une traverse (6) est positionné dans la première moitié de l'outil si bien que la traverse (6) s'avance dans la cavité de l'outil, et où les membranes (3, 4) sont posées de telle façon dans la deuxième moitié de l'outil que les membranes (3, 4) avec leurs extrémités pliées (8, 9) se trouvent l'une contre l'autre au moins par parties, et que les extrémités s'avancent dans la cavité de l'outil, où la traverse (6) du support (2) et les extrémités des membranes sont positionnées l'une par rapport aux autres de telle sorte que, pendant le moussage arrière ou le surmoulage arrière, les extrémités (8, 9) des membranes (3, 4) qui se superposent soient pressées au moins partiellement par la matière expansée ou le composé d'injection contre la traverse (6) du support (2).

8. Procédé selon la revendication 7, **caractérisé en ce que**, dans la moitié de l'outil dans laquelle sont placées les membranes (3, 4), soit disposée une barre en vue de produire une rainure (7) dans la zone de jonction des deux membranes (3, 4).
